# EUROPEAN PATENT SPECIFICATION

(11) **EP 4 167 375 B1**
(45) Date of publication and mention of the grant of the patent: **11.03.2026**
(21) Application number: 21833266.6
(22) Date of filing: 08.06.2021
(51) Int. Cl.: G06F 1/16, H04M 1/02

(54) **ROTARY SHAFT ASSEMBLY AND FOLDABLE SCREEN DEVICE**
DREHWELLENANORDNUNG UND FALTBARE SCHIRMVORRICHTUNG
ENSEMBLE ARBRE ROTATIF ET DISPOSITIF D'ÉCRAN PLIABLE

(30) Priority: 28.06.2020 CN 202010598703; 23.12.2020 CN 202011540338
(43) Date of publication of application: 19.04.2023
(73) Proprietor: Huawei Technologies Co., Ltd., Longgang District, Shenzhen, Guangdong 518129 (CN)
(72) Inventor: WANG, Lei, Shenzhen, Guangdong 518129 (CN); ZHANG, Hui, Shenzhen, Guangdong 518129 (CN); XU, Zhixiao, Shenzhen, Guangdong 518129 (CN); HUANG, Bo, Shenzhen, Guangdong 518129 (CN)
(74) Representative: MERH-IP Matias Erny Reichl Hoffmann Patentanwälte PartG mbB
(86) International application number: PCT/CN2021/098827
(87) International publication number: WO 2022/001596

(56) References cited:
- CN-A- 106 025 521
- CN-A- 106 711 579
- CN-A- 108 282 560
- CN-A- 108 847 137
- CN-A- 111 147 630
- CN-U- 208 225 377
- CN-U- 208 225 377
- CN-U- 210 073 179
- US-A1- 2012 212 433
- US-A1- 2019 212 786
- US-A1- 2020 201 385

## Description

This application claims priority to Chinese Patent Application No. 202010598703.4, filed with the China National Intellectual Property Administration on June 28, 2020 and entitled "ROTATION SHAFT ASSEMBLY AND FOLDABLE DISPLAY DEVICE", and Chinese Patent Application No. 202011540338.8, filed with the China National Intellectual Property Administration on December 23, 2020 and entitled "ROTATION SHAFT ASSEMBLY AND FOLDABLE DISPLAY DEVICE".

### TECHNICAL FIELD

This application pertains to the field of communications device technologies, and in particular, to a rotation shaft assembly and a foldable display device.

### BACKGROUND

Electronic devices such as a mobile phone and a computer are inextricably linked to our lives, are ubiquitous in daily life, and greatly improve living standards of people. With rapid development of communications device technologies, demands of people for larger screens of mobile phones are increasingly high because people expect improved experience when viewing a picture by using a mobile phone, improved operability of the mobile phone, and the like. To meet demands of consumers, a concept of a bezel-less screen emerges, and mobile phones with high screen-to-body ratios have been available. To pursue an ultimate form of the bezel-less screen, special-shaped screens emerge one after another, from a narrow bezel, and a bezel-less industrial design (Industrial Design, ID) to a bezel-less screen, a notch screen, a dewdrop screen, and a punch-hole screen. These efforts are made to meet the demands of the consumers for larger screens.

Large-screen mobile phones significantly improve user experience and visual effects, especially in business communication, playing games, reading novels, and watching movies. However, when a screen of an existing mobile phone is enlarged, an overall body of the mobile phone is enlarged, which makes it inconvenient to carry the mobile phone. Therefore, a foldable smartphone gradually enters people's vision. A foldable smartphone in the conventional technology usually includes a housing and a flexible display attached to an upper surface of the housing. The housing includes a first housing and a second housing that are connected by using a rotation shaft assembly, and the rotation shaft assembly is made of stainless steel. However, there is a considerable difficulty in mass production of the foldable smartphone currently.

Document CN 108 847 137 A generally discloses a display device that includes a flexible display panel, a support layer and a buffer layer. A flexible display panel is disposed above the support layer, and the support layer is disposed above the buffer layer. In the display device, the Young's modulus of the support layer is greater than the Young's modulus of the buffer layer, and the damping coefficient of the buffer layer is greater than or equal to 0.25.

Document US 2020/201385 A1 generally discloses an electronic device that includes a housing, a display, a middle plate, an adhesive layer, a support layer, and a coating layer. The housing includes a front plate facing a direction, a rear plate facing an opposite direction, and a lateral member surrounding a space between the front and rear plate. The display is configured to be seen through the front plate, and includes a first and second surface. The middle plate is disposed between the display and the rear plate, and includes a surface facing the display, and a recess. The adhesive layer is attached to the display, and the support layer is disposed between the adhesive layer and the middle plate. The coating layer is disposed between the support layer and the adhesive layer and is disposed in a first portion overlapped with the recess when viewed from the display.

CN 208 225 377 U generally discloses a buckle subassembly and flexible display device. The subassembly of buckling includes pivot subassembly, connecting piece and coverboard, connecting piece sliding connection coverboard and pivot subassembly, and the pivot subassembly can and be buckled at development condition and switched between the state. Development condition when buckling status switching, the pivot subassembly can be close to the removal with the coverboard relatively under the direction of connecting piece. When the state of buckling switched over to development condition, the removal can be kept away from with the coverboard relatively to the pivot subassembly under the direction of connecting piece.

US 2019/212786 A1 generally discloses a hinge assembly is provided that includes a first base, a second base, a flexible connection element, and a number of hinge elements. The flexible connection element is located between and coupled to the first base and the second base. The hinge elements are arranged in a line and located between the first base and the second base. Each of the hinge elements comprises an interior portion and an exterior portion opposite to the interior portion. The exterior portions of the hinge elements are coupled to the flexible connection element. The interior portions of the hinge elements are capable of being either close to or far away from each other by rotating the first base with respect to the second base.

CN 210 073 179 U generally discloses a folding assembly and a folding display terminal. The folding assembly is used for bearing the flexible screen. The folding assembly comprises a rotating shaft, a first shell, a second shell, a bent supporting piece and a connecting part. The rotating shaft comprises a rotating shaft body and a rotating shaft shell. The shaft body is arranged in the rotating shaft shell, and a gap is formed between the shaft body and the rotating shaft shell. The first shell and the second shell are rotationally connected through the rotating shaft body. The bending supporting piece is located on the side, facing the flexible screen, of the rotating shaft and connected with the first shell, the second shell and the bending area of the flexible screen. In addition, the connecting part is arranged between the bent supporting piece and the rotating shaft and used for connecting the bent supporting piece with the rotating shaft shell.

### SUMMARY

The invention is defined in independent claim 1. Preferred embodiments are defined in the dependent claims.

The first middle component covers the door plate, and the elastic modulus of the first middle component is greater than 100 MPa, so that rigidity of the first middle component can be ensured, the flatness of the display of the foldable display device in the bending region close to the rotation shaft assembly can be improved, and the display of the foldable display device is prevented from being easily damaged when being dropped or being squeezed by an object. Therefore, reliability of the display is improved, and user experience is improved.

The first middle component further covers at least a part of the rotation shaft to cover an assembly gap between the door plate and the rotation shaft. In this way, when an external sharp object squeezes the display, the first middle component can cover and protect the assembly gap between the door plate and the rotation shaft and a gap between the two door plates.

### BRIEF DESCRIPTION OF DRAWINGS

FIG. 1 is a schematic diagram of a structure of a foldable display device according to an embodiment of this application;
FIG. 2 is a schematic diagram of another structure of a foldable display device according to an embodiment of this application;
FIG. 3 is a schematic diagram of still another structure of a foldable display device according to an embodiment of this application;
FIG. 4 is a schematic diagram of yet another structure of a foldable display device according to an embodiment of this application;
FIG. 5 is a schematic diagram of yet still another structure of a foldable display device according to an embodiment of this application;
FIG. 6 is a schematic diagram of a further structure of a foldable display device according to an embodiment of this application;
FIG. 7 is a schematic diagram of a structure of a rotation shaft assembly in a foldable display device according to an embodiment of this application;
FIG. 8 is a schematic diagram of a structure of a first door plate of a rotation shaft assembly in a foldable display device according to an embodiment of this application;
FIG. 9 is another schematic diagram of a structure of a first door plate of a rotation shaft assembly in a foldable display device according to an embodiment of this application;
FIG. 10 is another schematic diagram of a structure of a first door plate of a rotation shaft assembly in a foldable display device according to an embodiment of this application;
FIG. 11 is another schematic diagram of a structure of a first door plate of a rotation shaft assembly in a foldable display device according to an embodiment of this application;
FIG. 12 is a schematic diagram of a structure of a second door plate of a rotation shaft assembly in a foldable display device according to an embodiment of this application;
FIG. 13 is another schematic diagram of a structure of a second door plate of a rotation shaft assembly in a foldable display device according to an embodiment of this application;
FIG. 14 is another schematic diagram of a structure of a second door plate of a rotation shaft assembly in a foldable display device according to an embodiment of this application;
FIG. 15 is another schematic diagram of a structure of a second door plate of a rotation shaft assembly in a foldable display device according to an embodiment of this application;

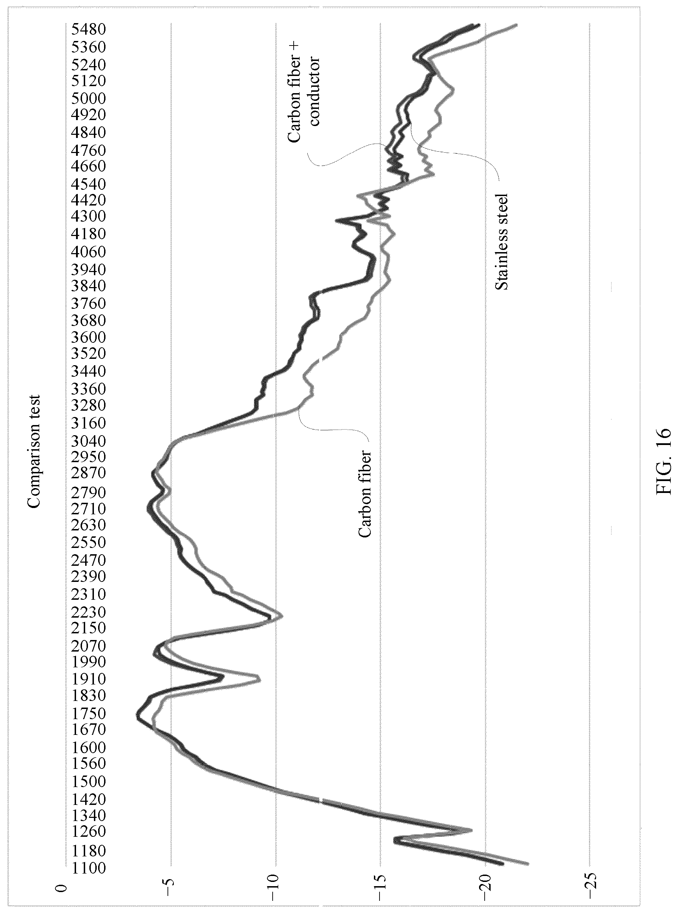

FIG. 16 is a diagram of comparison between radiation efficiency of an antenna in a case in which a second electrical material is disposed on a door plate of a rotation shaft assembly in a foldable display device according to an embodiment of this application, radiation efficiency of an antenna in a case in which a second electrical material is not disposed on a door plate of a rotation shaft assembly in a foldable display device in the conventional technology, and radiation efficiency of an antenna in a case in which a second electrical material is not disposed on a door plate of a rotation shaft assembly in a foldable display device according to an embodiment of this application;
FIG. 17 is a schematic diagram of a disassembled structure of a middle assembly of a rotation shaft assembly in a foldable display device according to an embodiment of this application;
FIG. 18 is a schematic diagram of an overall structure of a middle assembly of a rotation shaft assembly in a foldable display device according to an embodiment of this application;
FIG. 19 is a schematic diagram of another overall structure of a middle assembly of a rotation shaft assembly in a foldable display device according to an embodiment of this application;
FIG. 20 is a schematic diagram of a front side structure of a rotation shaft assembly in a foldable display device according to an embodiment of this application; and
FIG. 21 is a schematic diagram of a back side structure of a rotation shaft assembly in a foldable display device according to an embodiment of this application.

Descriptions of reference numerals:
100-Foldable smartphone; 10-Rotation shaft assembly; 101-Rotation shaft; 102-Door plate; 103-First region; 104-Second region; 105-Third region; 106-Fourth region; 1031-Fifth region; 1041-Sixth region; 1051-Seventh region; 1061-Eighth region; 1032-First casing body; 1042-Second casing body; 1052-Third casing body; 1062-Fourth casing body; 1021-First door plate; 1022-Second door plate; 20-First mechanical component; 201-First frame; 202-Second frame; 203-Third frame; 30-Second mechanical component; 40-Antenna; a, b, c, d-Gap; 50-Display; 60-Back cover; 70-Middle assembly; 701-First middle component; 702-Second middle component; 7021-First transition layer; 7022-First bonding layer; 703-Third middle component; 7031-Second transition layer; 7032-Extending part; 7033-Second bonding layer; 801-Shaft; 802-Rotating gear; and 803-Fastener.

### DESCRIPTION OF EMBODIMENTS

Terms used in implementations of this application are merely used to explain specific embodiments of this application, but are not intended to limit this application. The following describes implementations of embodiments of this application in detail with reference to the accompanying drawings.

Electronic devices such as a mobile phone and a computer have become necessary in our daily lives, and have even become part of our lives. In recent years, an appearance design, a screen size, photographing pixels, and hardware performance, and the like are all hot topics in competition of electronic manufacturers. A larger screen size is the most intuitive and biggest change for people in electronic devices over the years. With emergence of a flexible screen, a terminal device such as a mobile phone may implement screen bending and folding by using the flexible screen, so that the terminal device has a compact size, and the flexible screen has a large display area. Correspondingly, the terminal device may be a foldable display device or a curved-screen device.

A foldable display device or a curved screen device usually includes a housing and a flexible display attached to an upper surface of the housing. The housing includes a first housing, a second housing, and a rotation shaft assembly configured to rotatably connect to the first housing and the second housing. The rotation shaft assembly includes a rotation shaft and door plates located on two sides of the rotation shaft. In the conventional technology, the rotation shaft and the door plates are usually made of stainless steel. Consequently, the rotation shaft assembly in the foldable display device or the curved screen device is bulky, an overall weight of the foldable display device or the curved-surface screen device is large, and the foldable display device or the curved-surface screen device is not easy to carry. As a result, use comfort of a user is lowered.

Based on this, embodiments of this application provide a foldable display device. A door plate in a rotation shaft assembly is made of a first electrical material, and a density of the first electrical material is less than 1.70 g/cm³. In this way, a weight of the rotation shaft assembly can be reduced, so that an overall weight of the foldable display device can be reduced, the foldable display device is easy to carry, and an experience effect of the foldable display device is optimized.

In embodiments of this application, an example in which a foldable smartphone 100 is the foregoing foldable display device is used below for description.

### Embodiment 1

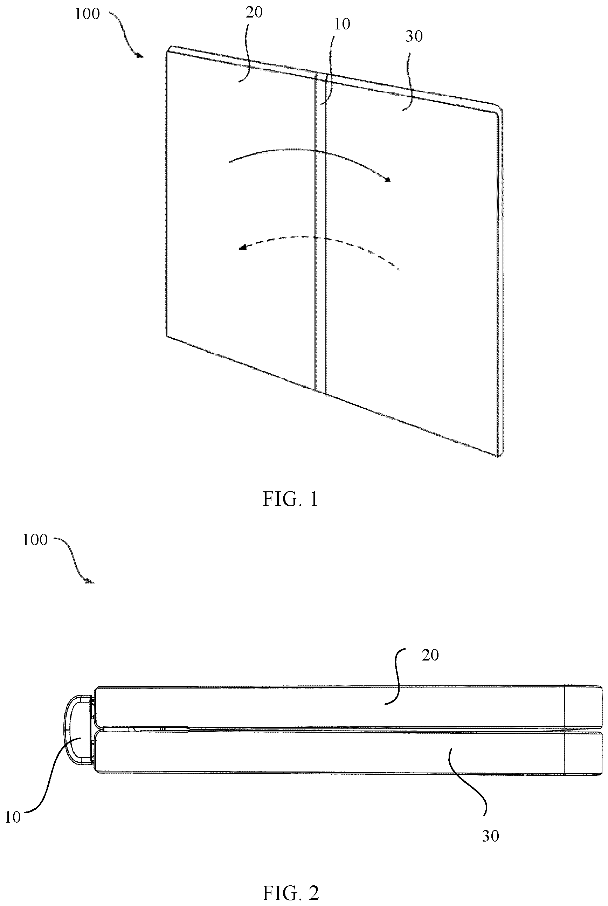

Refer to FIG. 1. An embodiment of this application provides a foldable smartphone 100. The foldable smartphone 100 may include: a rotation shaft assembly 10, and a first mechanical component 20 and a second mechanical component 30 that are rotatably connected to the rotation shaft assembly 10. The first mechanical component 20 and the second mechanical component 30 may rotate around the rotation shaft assembly 10 separately, so that ends of the first mechanical component 20 and the second mechanical component 30 that are away from the rotation shaft assembly 10 may be relatively close to or far away from each other. In this way, the foldable smartphone 100 may present different states such as a folded state (refer to FIG. 2) or an expanded state (refer to FIG. 1).

It should be noted that there may be two or more mechanical components in the foldable smartphone 100. In addition, when there are more than two mechanical components, adjacent mechanical components may rotate around rotation shaft assemblies 10 that are parallel to each other. In this way, a multi-layer foldable structure is formed, or a larger display area after expansion is obtained. In this embodiment of this application, an example in which the foldable smartphone 100 has two mechanical components (that is, the first mechanical component 20 and the second mechanical component 30 shown in FIG. 1) is mainly used for description.

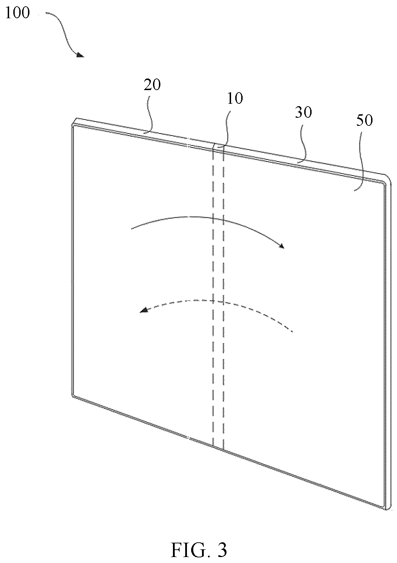

In this embodiment of this application, as shown in FIG. 3, the foldable smartphone 100 may further include a display 50. The display 50 may be a flexible display, and the flexible display may cover a surface of each of the first mechanical component 20, the rotation shaft assembly 10, and the second mechanical component 30. In this way, the flexible display may correspondingly present a folded or expanded state as the first mechanical component 20 and the second mechanical component 30 rotate.

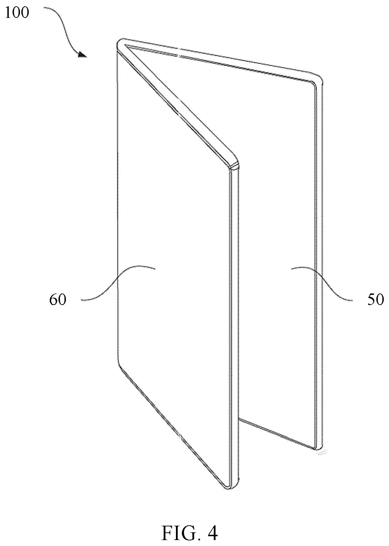

The foldable smartphone 100 may further include a back cover 60. As shown in FIG. 4, the back cover 60 is located on a surface that is of each of the first mechanical component 20, the rotation shaft assembly 10, and the second mechanical component 30 and that is away from the display 50. For example, the first mechanical component 20, the rotation shaft assembly 10, and the second mechanical component 30 are all located between the display 50 and the back cover 60.

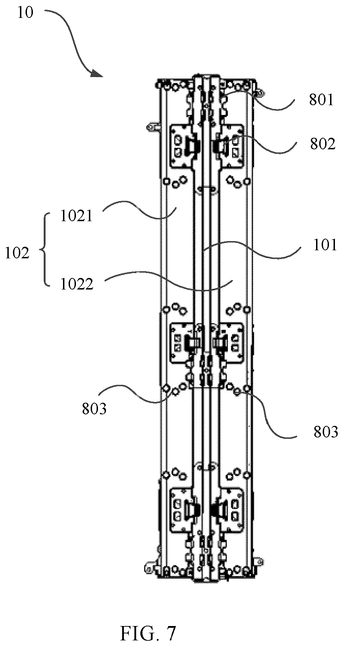

As shown in FIG. 7, the rotation shaft assembly 10 may include a rotation shaft 101 and at least two door plates 102 rotatably connected to the rotation shaft 101. The at least two door plates 102 are located on two sides of the rotation shaft 101, and the first mechanical component 20 and the second mechanical component 30 are rotatably connected to the rotation shaft 101 respectively by using the door plates 102.

In this embodiment of this application, at least one door plate 102 may be made of a first electrical material, and a density of the first electrical material is less than 1.70 g/cm³. In this way, a weight of the rotation shaft assembly 10 can be reduced, so that an overall weight of the foldable smartphone 100 can be reduced, the foldable smartphone 100 is easy to carry, and user experience can be improved.

It should be noted that there may be one or more rotation shafts 101 in the rotation shaft assembly 10. In this embodiment of this application, one rotation shaft 101 is disposed. In some other embodiments, when there are two or more rotation shafts 101, adjacent rotation shafts 101 may be rotatably connected to each other by using a damping piece, and the damping piece is rotatably connected to the rotation shafts 101. A quantity of rotation shafts 101 is increased, so that a bending region of the flexible display has better impact resistance, and damage caused by an excessively large bending angle or an excessively fast bending of the flexible display generated during bending can be reduced.

In this embodiment of this application, a material of the rotation shaft 101 may be a metal material, hard plastic, or the like. For example, the material of the rotation shaft 101 may be stainless steel. It should be noted that a specific material of the rotation shaft 101 is not limited in this embodiment of this application, and is not limited to the foregoing examples.

The surface of the rotation shaft 101 may further be wrapped with a flexible buffer layer. The flexible buffer layer may be made of a flexible material, for example, may be a silica gel material, thermoplastic polyurethane, a thermoplastic elastomer, or plastic. The flexible buffer layer is disposed, so that the rotation shaft 101 can be protected, and damage to the display 50 at a bending position can be reduced while the display 50 adapts to a plurality of rotation shafts 101.

When the flexible buffer layer is made of the silica gel material, because the silica gel material has high toughness, a folded region of the flexible display can be flexible to some extent, to ensure that a bending angle of the flexible display can be maximized.

A heat dissipation layer may be further disposed between the flexible buffer layer and the folded region of the flexible display. The heat dissipation layer may be a heat dissipation coating layer coated on a surface of the flexible buffer layer, and may be specifically a heat dissipation coating, a thermally conductive coating, or the like. In this way, the rotation shaft 101 not only has excellent thermal conductivity and heat dissipation performance, but also has high scratch resistance, abrasion resistance, and adhesion. The heat dissipation layer is disposed, so that when the flexible display is bent, heat generated in the folded region can be dissipated more quickly. Therefore, a service life of the flexible display is prolonged, and utilization of the foldable smartphone 100 is improved. Certainly, in some other embodiments, a porous flexible material, for example, a porous silica gel material, may be disposed on the rotation shaft 101.

In an optional implementation, the heat dissipation layer may include a porous organic layer and a heat conducting structure that is disposed on the porous organic layer and that is used to transfer heat. The heat conducting structure may be disposed on an upper surface of the porous organic layer, and may be specifically disposed between the display 50 and the porous organic layer. The porous organic layer has a porous structure, and a material of the porous organic layer may be specifically polyethylene terephthalate (Polyethylene terephthalate, PET), polyimide (Polyimide, PI), N-ethyl-N-(3-sulfopropyl)-3-methylaniline sodium salt (TOPS), or the like. A porous structure is designed, so that a flow of hot gas is accelerated, heat dissipation is promoted, flexibility is provided, and bending of the display 50 is not affected.

The heat conducting structure may be a plastic mesh or a metal strip, and may be made of aluminum, copper, aluminum nitride, or the like. Alternatively, the heat conducting structure may be an inorganic non-metal mesh or an inorganic non-metal strip, and may be made of graphite, graphene, carbon, or the like. The metal or non-metal heat conducting structure has a high heat conductivity coefficient and heat exchange coefficient, so that a radiation heat dissipation capability can be enhanced and a channel for increasing a heat flow rate is provided.

In addition, in this embodiment of this application, the rotation shaft assembly 10 further includes a middle assembly 70. One side of the middle assembly 70 is connected to the door plate 102, and the other side of the middle assembly 70 is connected to the display 50 of the foldable display device 100. The middle assembly 70 is disposed on the rotation shaft assembly of the foldable smartphone 100, one side of the middle assembly 70 is connected to the door plate, and the other side of the middle assembly 70 is connected to the display 50 of the foldable smartphone 100, so that flatness of the display 50 of the foldable smartphone 100 in a bending region close to the rotation shaft assembly can be improved, and the display 50 of the foldable smartphone 100 is prevented from being easily damaged when being dropped or being squeezed by an object. Therefore, reliability of the display 50 is improved, and user experience is improved. It should be noted that a specific structure of the middle assembly 70 is described in detail in the following embodiments. Details are not described herein.

In some embodiments, there may be two door plates 102 in the rotation shaft assembly 10. Refer to FIG. 7. The rotation shaft assembly 10 may include a rotation shaft 101 and a first door plate 1021 and a second door plate 1022 that are rotatably connected to the rotation shaft 101, and the first door plate 1021 and the second door plate 1022 are located on two sides of the rotation shaft 101 respectively. It may be understood that a first mechanical component 20 is rotatably connected to one side of the rotation shaft 101 by using the first door plate 1021, and the second mechanical component 30 is rotatably connected to the other side of the rotation shaft 101 by using the second door plate 1022. Certainly, in some other examples, there may be four door plates 102 in the rotation shaft assembly 10. Two door plates 102 are located on one side of the rotation shaft 101, the other two door plates 102 may be located on the other side of the rotation shaft 101, and the two door plates 102 on each of the two sides of the rotation shaft 101 may be spaced.

Both the first door plate 1021 and the second door plate 1022 may be made of a first electrical material, or the first door plate 1021 may be made of the first electrical material, or the second door plate 1022 may be made of the first electrical material. In this way, compared with a manner in which one of the first door plate 1021 and the second door plate 1022 is made of the first electrical material, a manner in which both the first door plate 1021 and the second door plate 1022 are made of the first electrical material can further reduce a weight of the rotation shaft assembly 10, so that an overall weight of the foldable smartphone 100 can be further reduced, the foldable smartphone 100 is easier to carry, and user experience can be further improved.

In this embodiment of this application, a density of the first electrical material may be less than or equal to 1.60 g/cm³. For example, the density of the first electrical material may be 1.60 g/cm³, 1.55 g/cm³, 1.50 g/cm³, 1.45 g/cm³, 1.40 g/cm³, or the like. This is not limited in this embodiment of this application, and is not limited to the foregoing examples.

In an optional implementation, the density of the first electrical material may be less than or equal to *1.55* g/cm³. For example, the first electrical material may be a carbon fiber material.

It should be noted that carbon fiber (Carbon Fiber, CF) refers to a new type of fiber material of high strength and high modulus fiber with carbon content of more than 95%. Carbon fiber is a crystallite graphite material obtained by stacking organic fibers such as sheet-like graphite crystallite along a fiber axial direction and performing carbonization and graphitization processing. Lighter than aluminum but stronger than steel, the carbon fiber features corrosion resistance, a high modulus, and not only has inherent characteristics of carbon materials, but also is as soft and processable as textile fibers. In addition, carbon fiber has the following advantages: high axial strength and a high modulus, a low density, high specific performance, no creep deformation, ultra-high temperature resistance in non-oxidized environments, good fatigue resistance, specific heat and conductivity between nonmetal and metal, a low coefficient of thermal expansion, anisotropy, good corrosion resistance, a good X-ray transmission capability, and good performance in electrical conductivity, thermal conductivity, and electromagnetic shielding.

Therefore, in this embodiment of this application, the carbon fiber material can not only reduce a weight of the door plate 102, but also meet a strength requirement, so that the door plate 102 has robust structural strength.

Based on the foregoing embodiment, a second electrical material may be further disposed on at least a part of the at least one door plate 102, and electrical conductivity of the second electrical material is higher than electrical conductivity of the first electrical material. For example, the second electrical material may be disposed in all or some regions on both the first door plate 1021 and the second door plate 1022, or the second electrical material may be only disposed in all or some regions on the first door plate 1021, or the second electrical material may be only disposed in all or some regions on the second door plate 1022. In this way, electrical conductivity of the door plate 102 can be enhanced.

A person skilled in the art may understand that the second electrical material may be disposed on the door plate 102 through processes such as coating, electroplating, and press-fitting. A specific disposing process of the second electrical material is not limited in this embodiment of this application, and is not limited to the foregoing examples.

In a possible implementation, the second electrical material may be a conductive material. For example, the second electrical material may be a conductor.

It should be noted that a conductor (Conductor) is a substance that has very small resistivity and conduct a current easily. There are a large number of charged particles that can move freely in the conductor, which are referred to as carriers. Under an action of external electric fields, the carriers move directionally, forming an obvious current. Metal is the most commonly-used conductor. Valence electrons at the outermost layer of a metal atom can easily break free from a nucleus to become free electrons. The left positive ions (an atomic core) form a regular lattice. Because concentration of free electrons in metal is very high, electrical conductivity of a metal conductor is usually higher than electrical conductivity of another conductor material. In addition, resistivity of the metal conductor usually decreases with decrease of a temperature. Moreover, at an extremely low temperature, resistivity of some types of metal and alloy disappears, and the metal and alloy are converted into a "superconductor", having an advantage of easily conducting a current.

For example, in this embodiment of this application, the second electrical material may be any one of nickel, magnesium, and gold or a composite material including any two or more of nickel, magnesium, and gold.

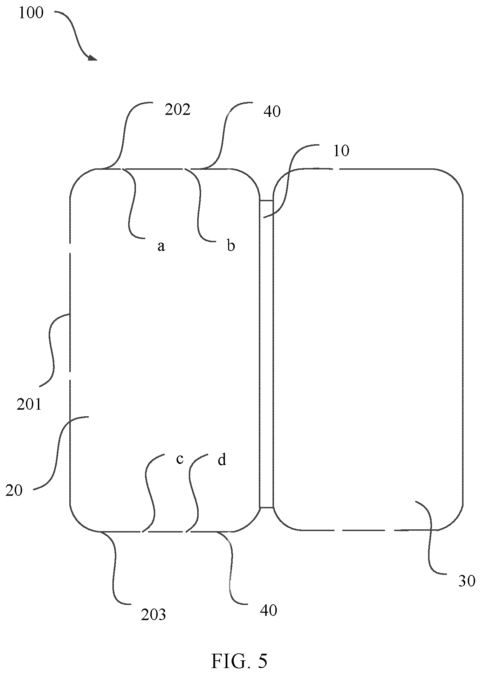

In this embodiment of this application, as shown in FIG. 5, the foldable smartphone 100 may further include at least one antenna 40. The antenna 40 may be located on at least one of the first mechanical component 20 and the second mechanical component 30 (in FIG. 5, the antenna 40 is located on the first mechanical component 20), and the second electrical material may be disposed at a location on the door plate 102 close to the antenna 40. Alternatively, the antenna 40 may be disposed on each of the first mechanical component 20 and the second mechanical component 30, and the second electrical material may be disposed at a location on each of the first door plate 1021 and the second door plate 1022 close to the antenna 40.

Because the carbon fiber material has a strong wave-absorbing characteristic, a high-order harmonic wave is generated, and radiation performance of the antenna 40 is affected. As a result, performance of the antenna 40 is lowered. However, in this embodiment of this application, the second electrical material is disposed on at least a part of the at least one door plate 102, so that influence of the door plate 102 on radiation performance of the antenna 40 can be resolved or reduced, and the door plate 102 can further provide good electrical conductivity in a radiation region. This helps improve mass production performance of the foldable smartphone 100.

To prevent the door plate 102 made of the carbon fiber material from affecting radiation performance of the antenna, and to improve electrical conductivity of the door plate 102, in this embodiment of this application, a thickness of a film layer formed by the second electrical material on the door plate 102 may be greater than or equal to 1 µm. For example, the thickness of the film layer formed by the second electrical material on the door plate 102 may be 1 µm, 2 µm, 3 µm, or the like. This is not limited in this embodiment of this application, and is not limited to the foregoing examples.

In an optional implementation, the thickness of the film layer formed by the second electrical material on the door plate 102 may be greater than or equal to 8 µm.

To ensure electrical conductivity of the door plate 102, an electric resistance between any two points on the film layer formed by the second electrical material may be less than or equal to 2 ohms. For example, the electric resistance between any two points on the film layer formed by the second electrical material may be 2 ohms, 1.5 ohms, 1 ohm, 0.5 ohm, or the like. This is not limited in this embodiment of this application, and is not limited to the foregoing examples. A smaller electric resistance between any two points on the film layer formed by the second electrical material indicates that resistivity of the second electrical material is very small, and that a current is easily conducted. This indicates better electrical conductivity of the door plate 102.

In an optional implementation, the electric resistance between any two points on the film layer formed by the second electrical material may be less than or equal to 0.2 ohms.

In this embodiment of this application, the first mechanical component 20 in the foldable smartphone 100 is used as an example. As shown in FIG. 5, the first mechanical component 20 may at least include a first frame 201, and a second frame 202 and a third frame 203 that are respectively connected to two ends of the first frame 201. The first frame 201 is disposed in parallel to an axial direction of the rotation shaft assembly 10. The second frame 202 and the third frame 203 are separately disposed perpendicular to the axial direction of the rotation shaft assembly 10. An end of the second frame 202 and an end of the third frame 203 are close to the rotation shaft assembly 10, and at least one antenna 40 is disposed on at least one of the second frame 202 and the third frame 203. In this embodiment of this application, as shown in FIG. 5, the antenna 40 is disposed on each of the second frame 202 and the third frame 203.

Specifically, a manner of disposing the second electrical material on the door plate 102 in the rotation shaft assembly 10 includes but is not limited to the following several possible implementations.

In a possible implementation, as shown in FIG. 7, both the first door plate 1021 and the second door plate 1022 in the rotation shaft assembly 10 are coated with the second electrical material (not shown).

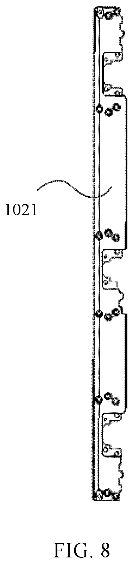

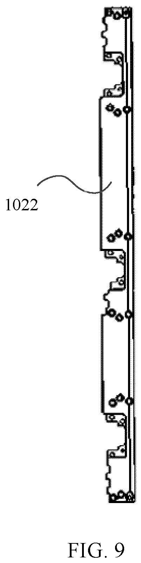

In another possible implementation, as shown in FIG. 8, the first door plate 1021 is completely coated with the second conductive material, or as shown in FIG. 9, the second door plate 1022 is completely coated with the second conductive material.

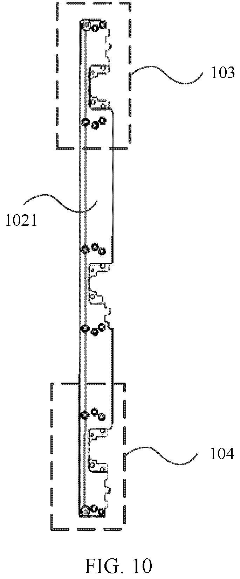

In another possible implementation, as shown in FIG. 10, a first region 103 (that is, an end of the first door plate 1021 close to the antenna 40 on the second frame 202) on the first door plate 1021 is covered with the second conductive material, or a second region 104 (that is, an end of the second door plate 1022 close to the antenna 40 on the third frame 203) on the first door plate 1021 is covered with the second conductive material. Alternatively, both the first region 103 and the second region 104 on the first door plate 1021 are covered with the second conductive material.

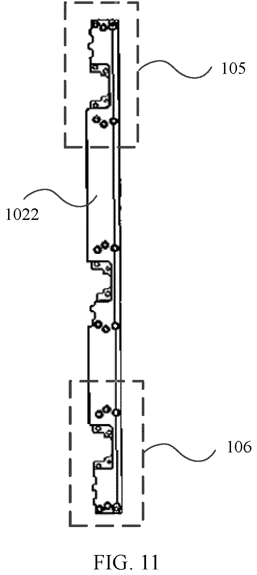

Similarly, as shown in FIG. 11, a third region 105 (that is, an end of the second door plate 1022 close to the antenna 40 on the second frame 202) on the second door plate 1022 may be covered with the second conductive material, or a fourth region 106 (that is, an end of the second door plate 1022 close to the antenna 40 on the third frame 203) on the second door plate 1022 may be covered with the second conductive material. Alternatively, both the third region 105 and the fourth region 106 on the second door plate 1022 are covered with the second conductive material.

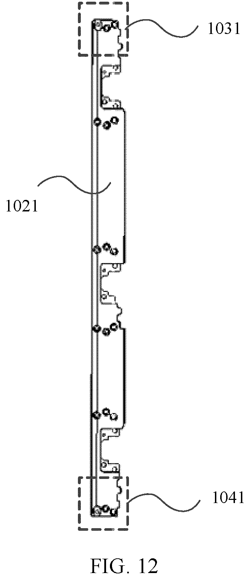

In another possible implementation, as shown in FIG. 12, a fifth region 1031 (that is, an end of the first door plate 1021 close to the antenna 40 on the second frame 202, namely an end part in the first region 103) on the first door plate 1021 is covered with the second conductive material, or a sixth region 1041 (that is, an end of the second door plate 1022 close to the antenna 40 on the third frame 203, namely an end part in the second region 104) on the first door plate 1021 is covered with the second conductive material. Alternatively, both the fifth region 1031 and the sixth region 1041 on the first door plate 1021 are covered with the second conductive material.

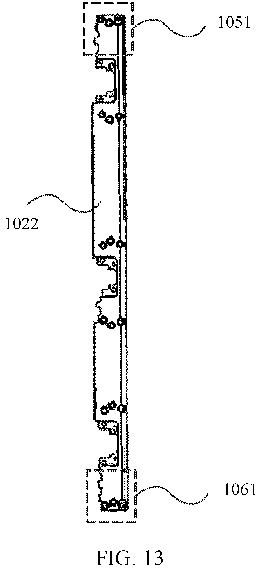

Similarly, as shown in FIG. 13, a seventh region 1051 (that is, an end of the second door plate 1022 close to the antenna 40 on the second frame 202, namely an end part in the third region 105) on the second door plate 1022 may be covered with the second conductive material, or an eighth region 1061 (that is, an end of the second door plate 1022 close to the antenna 40 on the third frame 203, namely an end part in the fourth region 106) on the second door plate 1022 may be covered with the second conductive material. Alternatively, both the seventh region 1051 and the eighth region 1061 on the second door plate 1022 are covered with the second conductive material.

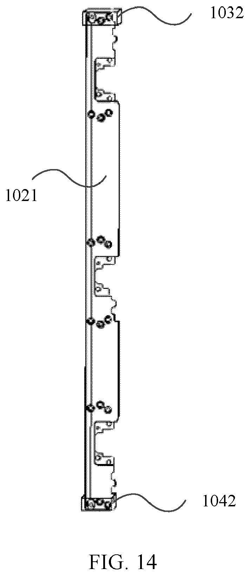

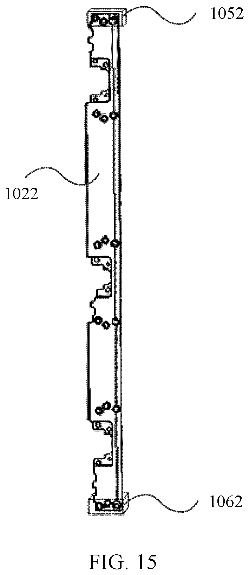

Certainly, in a possible implementation, a casing body that is made of the second electrical material may be disposed at an end of the door plate 102 close to the second frame 202 or the third frame 203. For example, as shown in FIG. 14, the first door plate 1021 is covered with a first casing body 1032, or the first door plate 1021 is covered with a second casing body 1042, or the first door plate 1021 is covered with both the first casing body 1032 and the second casing body 1042. Similarly, as shown in FIG. 15, the second door plate 1022 may be covered with a third casing body 1052, or the second door plate 1022 may be covered with a fourth casing body 1062, or the second door plate 1022 may be covered with both the third casing body 1052 and the fourth casing body 1052. It should be noted that when the casing body that is made of the second electrical material is disposed at the end of the door plate 102 close to the second frame 202 or the third frame 203, the casing body needs to be grounded.

Refer to FIG. 16. In the figure, a vertical axis represents radiation efficiency, and a horizontal axis represents frequency. It may be learned from three curves in the figure that when the second electrical material is disposed on a door plate 102 (for example, when the door plate 102 is made of a carbon fiber material and the door plate 102 is covered with a conductor material), compared with a door plate (made of stainless steel material) in the conventional technology and a door plate 102 on which the second electrical material is not disposed (for example, when the door plate 102 is made of a carbon fiber material but the door plate 102 is not covered with a conductor material), the door plate 102 that is made of a carbon fiber material and is covered with a conductor material and the door plate that is made of stainless steel have higher radiation efficiency than the door plate 102 that is made of a carbon fiber material but is not covered with a conductor material.

In some embodiments, both the first mechanical component 20 and the second mechanical component 30 may be metal middle frames, and at least a part of the metal middle frame forms the antenna 40.

Based on the foregoing description, in this embodiment of this application, as shown in FIG. 5, there are at least two gaps on each of the second frame 202 and the third frame 203. For example, there is a gap a and a gap b on the second frame 202, and the gap a and the gap b divide the second frame 202 into three antennas 40. The third frame 203 has a gap c and a gap d, and the gap c and the gap d divide the third frame 203 into three antennas 40.

The antenna 40 may be a Div antenna (Div Antenna), a Wi-Fi antenna, a Bluetooth antenna, a GPS antenna, a main antenna (Main Antenna), or a medium- and high-frequency multiple-input multiple-output (Multiple-Input Multiple-Output, MIMO) antenna. When the antenna 40 is a main antenna, the main antenna is located at the bottom of the foldable smartphone 100, so that an absorption rate (Specific Absorption Rate, SAR) of the foldable smartphone 100 is low.

Still refer to FIG. 5. Three antennas 40 are disposed on the top of the foldable smartphone 100. One antenna 40 may be a low-frequency antenna, another antenna 40 may be a medium- and high-frequency antenna, and a third antenna 40 may be a MIMO antenna covering a medium- and high-frequency band. For example, two antennas 40 may be Div antennas (Div Antenna) covering a low-, medium-, and high-frequency band, and the other antenna 40 may be a MIMO antenna. Alternatively, two antennas 40 may be Div antennas covering a low-, medium-, and high-frequency band, and the other antenna 40 may be a Bluetooth antenna (2.400 GHz), a Wi-Fi antenna (2.4 GHz or 5 GHz), and a GPS antenna. The Bluetooth antenna, the Wi-Fi antenna, and the GPS antenna may share a same antenna 40. In this case, the antenna 40 is a dual-band antenna. Alternatively, two antennas 40 may be antennas covering a 5G frequency band such as an N77 frequency band (3.3 GHz to 4.2 GHz) and an N79 frequency band (4.4 GHz to 5.0 GHz) of the 5G frequency band. Compared with a manner of the conventional technology in which one or two antennas 40 are disposed on the top of a mobile phone, in a manner in this embodiment of this application, three antennas 40 are disposed, so that an additional antenna 40 that can cover a medium- and high-frequency band may be provided. In this way, the antennas 40 on the top of the foldable smartphone 100 (that is, the second frame 202) is designed to have a higher degree of freedom, and can cover more frequency bands. It should be noted that, in this embodiment of this application, a quantity of antennas 40 disposed on the top of the mobile phone 100 includes but is not limited to three.

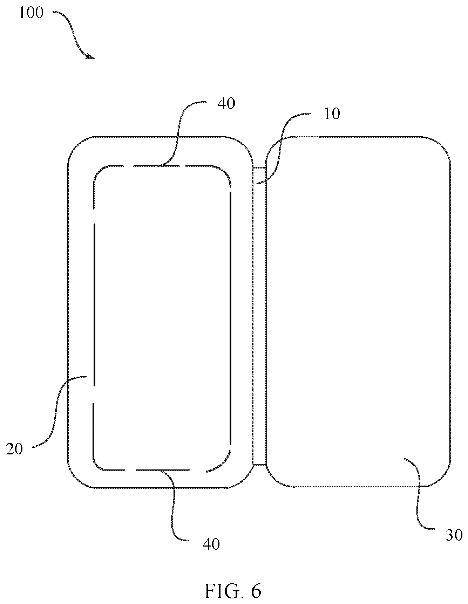

It should be noted that, in some other embodiments, at least one antenna 40 may also be disposed in the middle of the first mechanical component 20, the middle of the second mechanical component 30, or both the middle of the first mechanical component 20 and the middle of the second mechanical component 30. For example, as shown in FIG. 6, at least one antenna 40 is disposed inside the first mechanical component 20.

In addition, components inside the foldable smartphone 100, for example, a main circuit board, a processor, a memory, and a camera assembly, may be separately fastened to the first mechanical component 20 or the second mechanical component 30. For example, components such as a main circuit board, a processor, and a memory may be disposed inside the second mechanical component 30, and the first mechanical component 20 may be configured to bear components such as a camera assembly and an antenna. In this case, to form an electrical connection between components located in different mechanical components, an electrical connection line may be further disposed in the foldable smartphone. Two ends of the electrical connection line are separately connected to electrical connection points of two adjacent different mechanical components, to connect to different components such as the main circuit board, the processor, the camera assembly, or the antenna 40 on the mechanical components and transmit an electrical signal. The electrical connection line is made of a flexible material, and may be correspondingly bent or deformed as relative locations of the mechanical components change. In this way, when the foldable smartphone 100 is in different states such as a folded state or an expanded state, the electrical connection line can still maintain the electrical connection between the two adjacent mechanical components depending on bending deformation of the electrical connection line.

Specifically, the electrical connection line may have a plurality of different structures and forms. The main circuit board in the foldable smartphone 100 may be located in one of the mechanical components, and an electrical signal is transmitted between the main circuit board and a plurality of other components. To implement an electrical connection between the main circuit board and a component located in another mechanical component, the electrical connection line includes a flexible circuit board (flexible printed circuit, FPC). The flexible printed circuit board may include a plurality of leads, so that transmission of a plurality of different electrical signals can be implemented. In addition, components such as the antenna 40 in the foldable smartphone 100 may be electrically connected to the main circuit board through a coaxial cable. Therefore, in an optional implementation, the electrical connection line may also include a single independently-disposed cable, and the cable may be configured to implement signal transmission between two independent components. In this embodiment, a single cable may be configured to transmit different signals such as a coaxial signal.

It may be understood that a structure shown in this embodiment of this application does not constitute a specific limitation on the foldable smartphone 100. In some other embodiments of this application, the foldable smartphone 100 may include more or fewer components than those shown in the figure, or some components may be combined, or some components may be split, or different component arrangements may be used. The components shown in the figure may be implemented by hardware, software, or a combination of software and hardware.

### Embodiment 2

As shown in FIG. 7, an embodiment of this application provides a rotation shaft assembly 10. The rotation shaft assembly 10 includes a rotation shaft 101 and at least two door plates 102 that are rotatably connected to the rotation shaft 101 and located on two sides of the rotation shaft 101 respectively. At least one door plate 102 is made of a first electrical material, and a density of the first electrical material is less than 1.70 g/cm³. In this way, a weight of the rotation shaft assembly 10 can be reduced, so that an overall weight of the foldable smartphone 100 can be reduced, the foldable smartphone 100 is easy to carry, and user experience can be improved.

In addition, in this embodiment of this application, the rotation shaft assembly 10 further includes a middle assembly 70. One side of the middle assembly 70 is connected to the door plate 102, and the other side of the middle assembly 70 is connected to the display 50 of the foldable display device 100. The middle assembly 70 is disposed on the rotation shaft assembly 10, one side of the middle assembly 70 is connected to the door plate, and the other side of the middle assembly 70 is connected to the display 50 of the foldable smartphone 100, so that flatness of the display 50 of the foldable smartphone 100 in a bending region close to the rotation shaft assembly 10 can be improved, and the display 50 of the foldable smartphone 100 is prevented from being easily damaged when being dropped or being squeezed by an object. Therefore, reliability of the display 50 is improved, and user experience is improved. It should be noted that a specific structure of the middle assembly 70 is described in detail in the following embodiments. Details are not described herein.

In this embodiment of this application, there may be two or four door plates 102. When there are two door plates 102, the two door plates 102 are respectively a first door plate 1021 and a second door plate 1022, and both the first door plate 1021 and the second door plate 1022 may be made of a first electrical material. In this way, compared with a manner in which one of the first door plate 1021 and the second door plate 1022 is made of the first electrical material, a manner in which both the first door plate 1021 and the second door plate 1022 are made of the first electrical material can further reduce a weight of the rotation shaft assembly 10, so that an overall weight of the foldable smartphone 100 can be further reduced, the foldable smartphone 100 is easier to carry, and user experience can be further improved.

In this embodiment of this application, a density of the first electrical material may be less than or equal to 1.60 g/cm³. For example, the density of the first electrical material may be 1.60 g/cm³, 1.55 g/cm³, 1.50 g/cm³, 1.45 g/cm³, 1.40 g/cm³, or the like. This is not limited in this embodiment of this application, and is not limited to the foregoing examples.

In an optional implementation, the density of the first electrical material may be less than or equal to *1.55* g/cm³. For example, the first electrical material may be a carbon fiber material.

It should be noted that carbon fiber (Carbon Fiber, CF) refers to a new type of fiber material of high strength and high modulus fiber with carbon content of more than 95%. Carbon fiber is a crystallite graphite material obtained by stacking organic fibers such as sheet-like graphite crystallite along a fiber axial direction and performing carbonization and graphitization processing. Lighter than aluminum but stronger than steel, carbon fiber features corrosion resistance, a high modulus, and not only has inherent characteristics of carbon materials, but also is as soft and processable as textile fibers. In addition, carbon fiber has the following advantages: high axial strength and a high modulus, a low density, high specific performance, no creep deformation, ultra-high temperature resistance in non-oxidized environments, good fatigue resistance, specific heat and conductivity between non-metal and metal, a low coefficient of thermal expansion, anisotropy, good corrosion resistance, a good X-ray transmission capability, and good performance in electrical conductivity, thermal conductivity, and electromagnetic shielding.

Therefore, in this embodiment of this application, the carbon fiber material can not only reduce a weight of the door plate 102, but also meet a strength requirement, so that the door plate 102 has robust structural strength.

In this embodiment of this application, a second electrical material may be further disposed on at least a part of the at least one door plate 102, and electrical conductivity of the second electrical material is higher than electrical conductivity of the first electrical material. For example, the second electrical material may be disposed in all or some regions on both the first door plate 1021 and the second door plate 1022, or the second electrical material may be only disposed in all or some regions on the first door plate 1021, or the second electrical material may be only disposed in all or some regions on the second door plate 1022. In this way, electrical conductivity of the door plate 102 can be enhanced. In addition, because the carbon fiber material has a strong wave-absorbing characteristic, a high-order harmonic wave is generated, and radiation performance of the antenna 40 of the foldable smartphone 100 is affected. As a result, performance of the antenna 40 is lowered. However, in this embodiment of this application, the second electrical material is disposed on at least a part of the at least one door plate 102, so that influence of the door plate 102 on radiation performance of the antenna 40 can be resolved or reduced, and the door plate 102 can further provide good electrical conductivity in a radiation region. This helps improve mass production performance of the foldable smartphone 100.

A person skilled in the art may understand that the second electrical material may be disposed on the door plate 102 through processes such as coating, electroplating, and press-fitting. A specific disposing process of the second electrical material is not limited in this embodiment of this application, and is not limited to the foregoing examples.

In a possible implementation, the second electrical material may be a conductive material. For example, the second electrical material may be a conductor. It should be noted that a conductor (Conductor) is a substance that has very small resistivity and conduct a current easily. There are a large number of charged particles that can move freely in the conductor, which are referred to as carriers. Under an external electric field, the carriers move directionally, forming an obvious current. Metal is the most commonly-used conductor. Valence electrons at the outermost layer of a metal atom can easily break free from a nucleus and become free electrons. The left positive ions (an atomic core) form a regular lattice. Because concentration of free electrons in metal is very high, electrical conductivity of a metal conductor is usually higher than electrical conductivity of another conductor material. In addition, resistivity of the metal conductor usually decreases with decrease of a temperature. Moreover, at an extremely low temperature, resistivity of some types of metal and alloy disappears, and the metal and alloy are converted into a "superconductor", having an advantage of easily conducting a current.

For example, in this embodiment of this application, the second electrical material may be any one of nickel, magnesium, and gold or a composite material including any two or more of nickel, magnesium, and gold.

In addition, to prevent the door plate 102 made of the carbon fiber material from affecting radiation performance of the antenna, and to improve electrical conductivity of the door plate 102, in this embodiment of this application, a thickness of a film layer formed by the second electrical material on the door plate 102 may be greater than or equal to 1 µm. For example, the thickness of the film layer formed by the second electrical material on the door plate 102 may be 1 µm, 2 µm, 3 µm, or the like. This is not limited in this embodiment of this application, and is not limited to the foregoing examples.

In an optional implementation, the thickness of the film layer formed by the second electrical material on the door plate 102 may be greater than or equal to 8 µm.

To ensure electrical conductivity of the door plate 102, an electric resistance between any two points on the film layer formed by the second electrical material may be less than or equal to 2 ohms. For example, the electric resistance between any two points on the film layer formed by the second electrical material may be 2 ohms, 1.5 ohms, 1 ohm, 0.5 ohm, or the like. This is not limited in this embodiment of this application, and is not limited to the foregoing examples. A smaller electric resistance between any two points on the film layer formed by the second electrical material indicates that resistivity of the second electrical material is very small, and that a current is easily conducted. This indicates better electrical conductivity of the door plate 102.

In an optional implementation, the electric resistance between any two points on the film layer formed by the second electrical material may be less than or equal to 0.2 ohms.

### Embodiment 3

An embodiment of this application provides a foldable display device (for example, a foldable smartphone 100), including a first mechanical component 20, a second mechanical component 30, and a rotation shaft assembly 10. The rotation shaft assembly 10 is separately rotatably connected to the first mechanical component 20 and the second mechanical component 30. The rotation shaft assembly 10 includes a rotation shaft 101 and at least two door plates 102 that are rotatably connected to the rotation shaft 101 and that are located on two sides of the rotation shaft 101. The rotation shaft assembly 10 further includes: a middle assembly 70. One side of the middle assembly 70 is connected to the door plate 101, the other side of the middle assembly 70 is connected to a display 50 of the foldable smartphone 100, and the first mechanical component 20 and the second mechanical component 30 are respectively rotatably connected to the rotation shaft 101 by using the door plates 102.

The display 50 is usually supported by the rotation shaft assembly 10 in a bending region. In other words, flatness of the rotation shaft assembly 10 directly affects flatness of the display 50. However, as a mechanism for implementing a bending function of the foldable smartphone 100, the rotation shaft assembly 10 is a movable mechanism, and has a large quantity of parts and a complex structure. In addition, due to accumulation of tolerances, it is difficult to achieve high flatness of a surface of the rotation shaft assembly 10 for supporting the display 50. For example, due to manufacturing and assembly precision tolerances between the rotation shaft 101 in the rotation shaft assembly 10 and the door plates 102 on the two sides, there is a step between the rotation shaft 101 and the door plates 102 on the two sides. If the display 50 is directly supported by the rotation shaft assembly 10, the display 50 on the rotation shaft assembly 10 is also not flat. Therefore, flatness of the display 50 in the bending region is poor, and a flatness difference of the rotation shaft assembly 10 causes inconsistent gaps between the rotation shaft assembly 10 and the supported display 50. Therefore, the display 50 is easily damaged because of impact if the foldable smartphone 100 is dropped.

According to the foldable smartphone 100 provided in this embodiment of this application, the middle assembly 70 is disposed on the rotation shaft assembly of the foldable smartphone 100, one side of the middle assembly 70 is connected to the door plate, and the other side of the middle assembly 70 is connected to the display 50 of the foldable smartphone 100, so that flatness of the display 50 of the foldable smartphone 100 in a bending region close to the rotation shaft assembly can be improved, and the display 50 of the foldable smartphone 100 is prevented from being easily damaged when being dropped or being squeezed by an object. Therefore, reliability of the display 50 is improved, and user experience is improved.

The following describes in detail a specific structure of the rotation shaft assembly 10 in the foldable smartphone 100 and a specific structure of the middle assembly 70 in the rotation shaft assembly 10.

An embodiment of this application provides a rotation shaft assembly 10. The rotation shaft assembly 10 may include a rotation shaft 101 and at least two door plates 102. The at least two door plates 102 are rotatably connected to the rotation shaft 101 and are located on two sides of the rotation shaft 101. In addition the rotation shaft assembly 10 may further include a middle assembly 70. One side of the middle assembly 70 is connected to the door plate 102, and the other side of the middle assembly 70 is connected to the display 50 of the foldable smartphone 100.

There are two door plates 102. The two door plates 102 are a first door plate 1021 and a second door plate 1022 respectively. The middle assembly 70 includes two parts that are symmetrically disposed. A first part (for example, a middle assembly 70 located on a same side as the first door plate 1021) in the middle assembly 70 is connected to the first door plate 1021. A second part (for example, a middle assembly 70 located on a same side as the second door plate 1022) of the middle assembly 70 is connected to the second door plate 1022.

The middle assembly 70 includes two first middle components 701. The two middle components 701 are symmetrically disposed to cover the first door plate 1021 and the second door plate 1022. Specifically, one of the two first middle components 701 (for example, a first middle component 701 located on the same side as the first door plate 1021) covers the first door plate 1021 and is connected to the first door plate 1021. The other of the two first middle components 701 (for example, a first middle component 701 located on the same side as the second door plate 1022) covers the second door plate 1022 anc is connected to the second door plate 1022.

An elastic modulus of the first middle component 701 is greater than 100 MPa. For example, the elastic modulus of the first middle component 701 may be 110 MPa, 120 MPa, 130 MPa, or the like. A specific value of the elastic modulus of the first middle component 701 is not limited to the foregoing examples.

In a possible implementation, the first middle component 701 may be a steel plate.

The steel plate covers the door plate 102, so that rigidity of the first middle component 701 can be ensured. In addition, the first middle component 701 is disposed, so that the display 50 is not supported in a bending region by an outer surface formed by the rotation shaft assembly 10 including the rotation shaft 101, the first door plate 1021, and the second door plate 1022, but directly supported by two steel plates with a high flatness. In this way, flatness of the display 50 of the foldable smartphone 100 in the bending region close to the rotation shaft assembly 10 can be improved, and the display 50 of the foldable smartphone 100 is prevented from being easily damaged when being dropped or being squeezed by an object. Therefore, reliability of the display 50 is improved, and user experience is improved.

Alternatively, in some other embodiments, the first middle component 701 may alternatively be another metal material of specific rigidity or strength. This is not limited in this embodiment of this application.

In addition, the first middle component 701 may also cover at least a part of the rotation shaft 101. The first middle component 701 covers the door plate 102 and the at least a part of the rotation shaft 101. In this way, when an external sharp object squeezes the display 50, the first middle component 701 can cover and protect an assembly gap between the door plate and the rotation shaft and a gap between the two door plates.

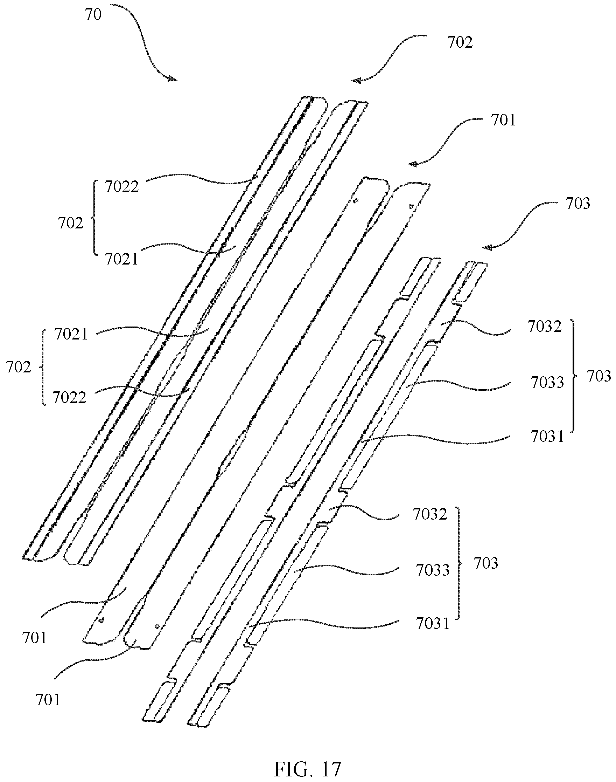

Still refer to FIG. 17. The middle assembly 70 may further include two second middle components 702. Each second middle component 702 may include a first transition layer 7021 and a first bonding layer 7022. One surface of the first transition layer 7021 may cover the first middle component 701 and be connected to the first middle component 701, one surface of the first bonding layer 7022 is connected to the first middle component 701, and the other surface of the first bonding layer 7022 is connected to the display 50.

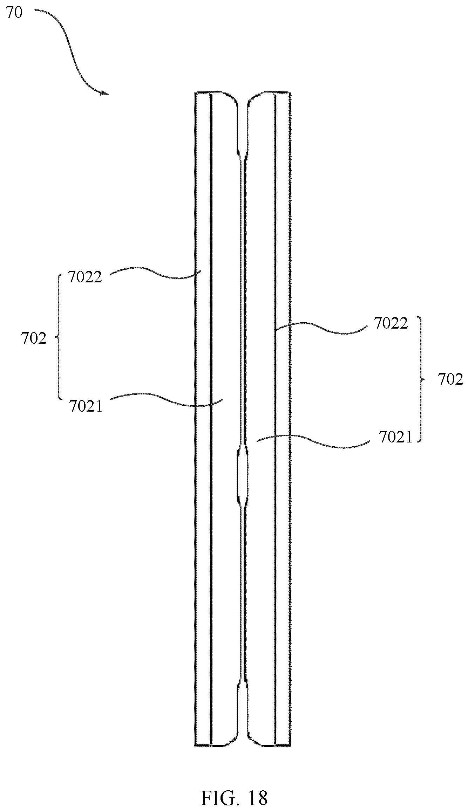

In a possible implementation, as shown in FIG. 18, the transition layer 7021 may cover a side that is of the first middle component 701 and that is close to the rotation shaft 101, and the first bonding layer 7022 may cover a side that is of the first middle component 701 and that is away from the rotation shaft 101.

In the second middle component 702, one surface of the first transition layer 7021 covers the first middle component 701 and is connected to the first middle component 701, one surface of the first bonding layer 7022 is connected to the first middle component 701, and the other surface of the first bonding layer 7022 is connected to the display 50. When the first door plate and the second door plate rotate around the rotation shaft relative to each other to drive the display 50 to bend, direct friction is avoided between the first middle component 701 and a component (for example, a metal support) at the bottom of the display 50 when the first middle component 701 rotates with the door plate, so that the first middle component 701 is protected from being worn or damaged.

In this embodiment of this application, the first transition layer 7021 may be a film layer made of polyurethane (Polyurethane, PU) mylar. The polyurethane mylar is also referred to as PU mylar. Alternatively, the first transition layer 7021 may be a film layer made of polytetrafluoroethylene (Polytetrafluoroethylene, PTFE). The polytetrafluoroethylene is also referred to as Teflon or Teflon.

Still refer to FIG. 17, in this embodiment of this application, the middle assembly 70 may further include two third middle components 703, and the third middle component 703 is located between the first middle component 701 and the door plate 102. Each third middle component 703 may include a second transition layer 7031 and a second bonding layer 7033. One surface of the second transition layer 7031 may cover the door plate 102 and be connected to the door plate 102, one surface of the second bonding layer 7033 is connected to the door plate 102, and the other surface of the second bonding layer 7033 is connected to the first middle component 701.

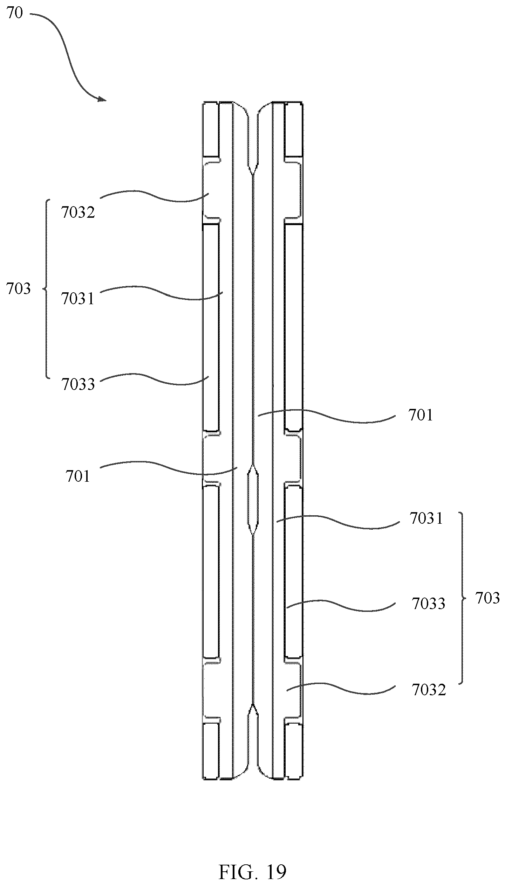

As shown in FIG. 19, there may be at least one extending part 7032 on a side that is of the second transition layer 7031 and that is away from the rotation shaft 101, and the extending part 7032 is used to cover an avoidance hole on the door plate 102. The second bonding layer 7033 may be divided into at least two segments, the at least two segments of the second bonding layer 7033 are located on the side that is of the second transition layer 7031 and that is away from the rotation shaft 101, and the at least two segments of the second bonding layer 7033 are located on two sides of the extending part 7032. For example, in FIG. 19, the second bonding layer 7033 is divided into four segments. The four segments of the second bonding layer 7033 are located on the side that is of the second transition layer 7031 and that is away from the rotation shaft 101, and the four segments of the second bonding layer 7033 are located on two sides of extending parts 7032.

As shown in FIG. 7, to avoid components such as a shaft 801 and a rotating gear 802, avoidance holes are disposed on corresponding positions on the first door plate 1021 and the second door plate 1022. The at least one extending part 7032 is disposed on the side that is of the second transition layer 7031 and that is away from the rotation shaft. The avoidance hole (for example, the avoidance hole for accommodating the shaft 801 or the avoidance hole for accommodating the rotating gear 802) on the door plate can be covered, to prevent a large gap existing between the door plate and the first middle component 701, so as to prevent affecting a rotation effect and overall assembly compactness of the rotation shaft assembly.

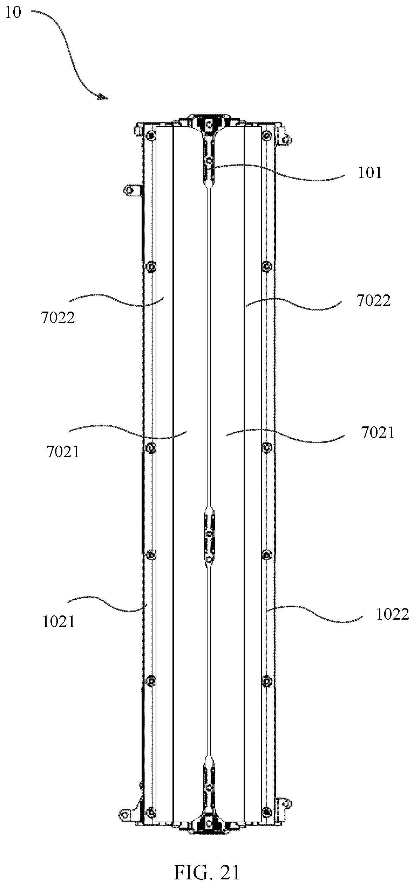

In addition, still refer to FIG. 7. The first door plate 1021 and the second door plate 1022 further have a plurality of components (for example, a fastener 803 used to fasten the door plate 102). The middle assembly 70 is disposed between the door plate 102 and the display 50 (refer to FIG. 21), so that flatness of the display 50 of the foldable smartphone 100 in the bending region can be improved, and reliability of the bending region of the display 50 can be improved when the display 50 is squeezed by an object or is dropped. In addition, a problem is further avoided that the display 50 may be damaged because no effective support is obtained if an external sharp object squeezes a position that is on the display 50 and that is corresponding to a component.

In an optional implementation, the second transition layer 7031 may be a film layer made of polyethylene terephthalate (Polyethylene terephthalate, PET). A PET sheet is attached to a corresponding position on the door plate 102, and may completely cover a corresponding avoidance hole on the door plate 102 and a position that is not flat on the fastener 803 (such as a rivet). The steel plate and the PET may prevent squeezing impact on these positions.

Alternatively, in some other embodiments, the second transition layer 7031 may be another non-metallic material with specific strength. This is also not limited in this embodiment of this application. It may be understood that, in this embodiment of this application, the first bonding layer 7022 and the second bonding layer 7033 may be double-sided adhesive.

It should be noted that a thickness of the second transition layer 7031 may be the same as a thickness of the second bonding layer 7033. In this way, it can be avoided that a height difference exists between the door plate and the first middle component 701 after the second bonding layer 7033 bonds the door plate to the first middle component 701, and the thickness of the second transition layer 7031 is the same as the thickness of the second bonding layer 7033, so that the first middle component 701 and the door plate are tightly bonded by using the third middle component 703.

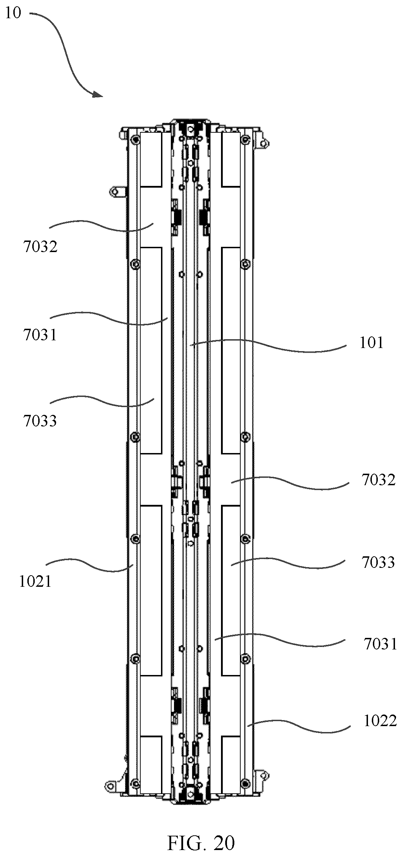

FIG. 20 is a schematic diagram of a structure of the rotation shaft assembly 10 in which the third middle component 703 in the middle assembly 70 is disposed on the door plate 102 (the first door plate 1021 and the second door plate 1022). Based on FIG. 20, FIG. 21 is a schematic diagram of a structure of the rotation shaft assembly 10 in which the first middle component 701 and the second middle component 702 in the middle assembly 70 are disposed on the door plate 102 (the first door plate 1021 and the second door plate 1022). In FIG. 21, the first middle component 701 and the third middle component 703 are covered by the second middle component 702. Refer to FIG. 20 and FIG. 21. The rotation shaft assembly 10 includes the middle assembly 70, the third middle component 703 in the middle assembly 70 is connected to the door plate 102 (the first door plate 1021 and the second door plate 1022), and the second middle component 702 in the middle assembly 70 is connected to the display 50. In this way, when the first door plate 1021 and the second door plate 1022 rotate around the rotation shaft 101 relative to each other to drive the display 50 (display 50) to bend, the flatness of the display 50 of the foldable smartphone 100 in the bending region can be improved. In addition, the first middle component 701 (for example, the steel plate) moves along with the first door plate 1021 and the second door plate 1022 that are connected to the rotation shaft 101. When the foldable smartphone 100 is bent to a closed state, the first middle component 701 also protects the foldable smartphone 100 if the foldable smartphone 100 is dropped, to prevent the display 50 from being damaged due to direct impact caused by deformation of the rotation shaft 101 when the foldable smartphone 100 is dropped. In this way, reliability of the bending region of the display 50 obtained when the display 50 is squeezed by an object or is dropped can be improved, and a service life of the display 50 can be prolonged to some extent.

In descriptions of embodiments of this application, it should be noted that, unless otherwise clearly specified and limited, the terms "installation", "connection to", and "connection" should be understood in a broad sense. For example, the connection may be a fixed connection, may be an indirect connection by using an intermediate medium, or may be an internal connection between two elements or an interaction relationship between two elements. For a person of ordinary skill in the art, specific meanings of the foregoing terms in embodiments of this application may be understood based on a specific situation.

An apparatus or element in embodiments of this application or an implied apparatus or element needs to have a specific direction and be constructed and operated in a specific direction, and therefore cannot be construed as a limitation on embodiments of this application. In the descriptions of the embodiments of this application, the meaning of "a plurality of" is two or more, unless otherwise precisely and specifically specified.

In the specification, claims, and accompanying drawings in embodiments of this application, the terms "first", "second", "third", "fourth", and so on (if available) are intended to distinguish between similar objects but do not necessarily indicate a specific order or sequence. It should be understood that the data termed in such a way is interchangeable in proper circumstances so that the embodiments of this application described herein can be implemented in an order other than the order illustrated or described herein. Moreover, the terms "include", "have" and any other variants mean to cover the non-exclusive inclusion, for example, a process, method, system, product, or device that includes a list of steps or units is not necessarily limited to those expressly listed steps or units, but may include other steps or units not expressly listed or inherent to such a process, method, system, product, or device.

Finally, it should be noted that the foregoing embodiments are merely intended for describing the technical solutions of embodiments of this application other than limiting embodiments of this application. Although embodiments of this application are described in detail with reference to the foregoing embodiments, persons of ordinary skill in the art should understand that they may still make modifications to the technical solutions described in the foregoing embodiments or make equivalent replacements to some or all technical features thereof, in the scope of the appended claims.

## Claims

1. A rotation shaft assembly (10) for use in a foldable display device (100), comprising:
a rotation shaft (101) and at least two door plates (102) that are rotatably connected to the rotation shaft (101) and located on two sides of the rotation shaft (101), wherein
the rotation shaft assembly (10) further comprises a middle assembly (70), wherein
one side of the middle assembly (70) is connected to the at least two door plates (102), and the other side of the middle assembly (70) is connected to a display (50) of the foldable display device (100),
wherein there are two door plates, and the two door plates are a first door plate (1021) and a second door plate (1022) respectively; and
the middle assembly (70) comprises two first middle components (701)that are symmetrically disposed and are flat plates, wherein one of the two first middle components (701) covers the first door plate (1021) and is connected to the first door plate (1021), and the other of the two first middle components (701) covers the second door plate (1022) and is connected to the second door plate (1022), and an elastic modulus of the first middle components (701) is greater than 100 MPa; and
wherein the first middle components (701) further cover at least a part of the rotation shaft (101) to cover an assembly gap between the door plates (102) and the rotation shaft (101).

2. The rotation shaft assembly (10) according to claim 1, wherein the middle assembly (70) further comprises two second middle components (702);
each second middle component (702) comprises a first transition layer (7021) and a first bonding layer (7022); and
a surface of the first transition layer (7021) covers the respective first middle component (701) and is connected to the respective first middle component (701), one surface of the first bonding layer (7022) is connected to the respective first middle component (701), and the other surface of the first bonding layer (7022) is connected to the display (50).

3. The rotation shaft assembly (10) according to claim 1 or 2, wherein the middle assembly (70) further comprises two third middle components (703), and the third middle components (703) are located between the first middle components (701) and the door plates (102);
each third middle component comprises a second transition layer (7031) and a second bonding layer (7032); and
a surface of the second transition layer (7031) covers the door plates (102) and is connected to the door plates (102), one surface of the second bonding layer (7032) is connected to the door plates (102), and the other surface of the second bonding layer (7032) is connected to the respective first middle component (701).

4. The rotation shaft assembly (10) according to claim 3, wherein there is at least one extending part on a side of the second transition layer (7031) away from the rotation shaft (101), and the extending part is used to cover an avoidance hole on the door plates (102); and
the second bonding layer (7032) is divided into at least two segments, the at least two segments of the second bonding layer (7032) are located on the side of the second transition layer (7031) away from the rotation shaft (101), and the at least two segments of the second bonding layer are located on two sides of the extending part.

5. A foldable display device (100), comprising a first mechanical component (20), a second mechanical component (30), and the rotation shaft assembly (10) according to any one of claims 1 to **4,** wherein the rotation shaft assembly (10) is rotatably connected to the first mechanical component (20) and the second mechanical component (30) respectively; and
the first mechanical component (20) and the second mechanical component (30) are rotatably connected to the rotation shaft (101) by using the door plates (102) respectively.

## Patentansprüche

1. Drehwellenanordnung (10) zur Verwendung in einer faltbaren Anzeigevorrichtung (100), umfassend:
eine Drehwelle (101) und mindestens zwei Türplatten (102), die drehbar mit der Drehwelle (101) verbunden sind und sich auf zwei Seiten der Drehwelle (101) befinden, wobei
die Drehwellenanordnung (10) ferner eine mittlere Anordnung (70) umfasst, wobei
eine Seite der mittleren Anordnung (70) mit den mindestens zwei Türplatten (102) verbunden ist und die andere Seite der mittleren Anordnung (70) mit einer Anzeige (50) der faltbaren Anzeigevorrichtung (100) verbunden ist,
wobei zwei Türplatten vorhanden sind und die zwei Türplatten eine erste Türplatte (1021) bzw. eine zweite Türplatte (1022) sind; und
die mittlere Anordnung (70) zwei erste mittlere Komponenten (701) umfasst, die symmetrisch angeordnet sind und flache Platten sind, wobei eine der zwei ersten mittleren Komponenten (701) die erste Türplatte (1021) abdeckt und mit der ersten Türplatte (1021) verbunden ist und die andere der zwei ersten mittleren Komponenten (701) die zweite Türplatte (1022) abdeckt und mit der zweiten Türplatte (1022) verbunden ist und ein Elastizitätsmodul der ersten mittleren Komponenten (701) größer als 100 MPa ist; und
wobei die ersten mittleren Komponenten (701) ferner zumindest einen Teil der Drehwelle (101) abdecken, um einen Anordnungsspalt zwischen den Türplatten (102) und der Drehwelle (101) abzudecken.

2. Drehwellenanordnung (10) nach Anspruch 1, wobei die mittlere Anordnung (70) ferner zwei zweite mittlere Komponenten (702) umfasst;
jede der zweiten mittleren Komponenten (702) eine erste Übergangsschicht (7021) und eine erste Verbindungsschicht (7022) umfasst; und
eine Oberfläche der ersten Übergangsschicht (7021) die jeweilige erste mittlere Komponente (701) abdeckt und mit der jeweiligen ersten mittleren Komponente (701) verbunden ist, eine Oberfläche der ersten Verbindungsschicht (7022) mit der jeweiligen ersten mittleren Komponente (701) verbunden ist und die andere Oberfläche der ersten Verbindungsschicht (7022) mit der Anzeige (50) verbunden ist.

3. Drehwellenanordnung (10) nach Anspruch 1 oder 2, wobei die mittlere Anordnung (70) ferner zwei dritte mittlere Komponenten (703) umfasst und die dritten mittleren Komponenten (703) sich zwischen den ersten mittleren Komponenten (701) und den Türplatten (102) befinden;
jede der dritten mittleren Komponenten eine zweite Übergangsschicht (7031) und eine zweite Verbindungsschicht (7032) umfasst; und
eine Oberfläche der zweiten Übergangsschicht (7031) die Türplatten (102) abdeckt und mit den Türplatten (102) verbunden ist, eine Oberfläche der zweiten Verbindungsschicht (7032) mit den Türplatten (102) verbunden ist und die andere Oberfläche der zweiten Verbindungsschicht (7032) mit der jeweiligen ersten mittleren Komponente (701) verbunden ist.

4. Drehwellenanordnung (10) nach Anspruch 3, wobei mindestens ein Verlängerungsteil auf einer Seite der zweiten Übergangsschicht (7031), die von der Drehwelle (101) abgewandt ist, vorhanden ist und das Verlängerungsteil dazu verwendet wird, ein Ausweichloch in den Türplatten (102) abzudecken; und die zweite Verbindungsschicht (7032) in mindestens zwei Segmente unterteilt ist, die mindestens zwei Segmente der zweiten Verbindungsschicht (7032) sich auf der Seite der zweiten Übergangsschicht (7031), die von der Drehwelle (101) abgewandt ist, befinden und die mindestens zwei Segmente der zweiten Verbindungsschicht sich auf zwei Seiten des Verlängerungsteils befinden.

5. Faltbare Anzeigevorrichtung (100), umfassend eine erste mechanische Komponente (20), eine zweite mechanische Komponente (30) und die Drehwellenanordnung (10) nach einem der Ansprüche 1 bis 4, wobei die Drehwellenanordnung (10) drehbar mit der ersten mechanischen Komponente (20) bzw. der zweiten mechanischen Komponente (30) verbunden ist; und
die erste mechanische Komponente (20) und die zweite mechanische Komponente (30) jeweils unter Verwendung der Türplatten (102) drehbar mit der Drehwelle (101) verbunden sind.

## Revendications

1. Ensemble arbre rotatif (10) destiné à être utilisé dans un dispositif d'écran pliable (100), comprenant :
un arbre rotatif (101) et au moins deux plaques de porte (102) qui sont reliées en rotation à l'arbre rotatif (101) et situées sur deux côtés de l'arbre rotatif (101), dans lequel
l'ensemble arbre rotatif (10) comprend également un ensemble central (70), dans lequel
un côté de l'ensemble central (70) est relié aux au moins deux plaques de porte (102), et l'autre côté de l'ensemble central (70) est relié à un écran (50) du dispositif d'écran pliable (100),
dans lequel il existe deux plaques de porte, et les deux plaques de porte sont une première plaque de porte (1021) et une seconde plaque de porte (1022) respectivement ; et
l'ensemble central (70) comprend deux premiers éléments centraux (701) disposés de manière symétrique et constitués de plaques planes, dans lequel l'un des deux premiers éléments centraux (701) recouvre la première plaque de porte (1021) et est relié à la première plaque de porte (1021), et l'autre des deux premiers éléments centraux (701) recouvre la seconde plaque de porte (1022) et est relié à la seconde plaque de porte (1022), et le module d'élasticité des premiers éléments centraux (701) est supérieur à 100 MPa ; et
dans lequel les premiers éléments centraux (701) recouvrent également au moins une partie de l'arbre rotatif (101) pour couvrir un espace d'assemblage entre les plaques de porte (102) et l'arbre rotatif (101).

2. Ensemble arbre rotatif (10) selon la revendication 1, dans lequel l'ensemble central (70) comprend également deux deuxièmes éléments centraux (702) ;
chaque deuxième élément central (702) comprend une première couche de transition (7021) et une première couche de liaison (7022) ; et
une surface de la première couche de transition (7021) recouvre le premier élément central (701) respectif et est reliée au premier élément central (701) respectif, une surface de la première couche de liaison (7022) est reliée au premier élément central (701) respectif, et l'autre surface de la première couche de liaison (7022) est reliée à l'écran (50).

3. Ensemble arbre rotatif (10) selon la revendication 1 ou 2, dans lequel l'ensemble central (70) comprend également deux troisièmes éléments centraux (703), et les troisièmes éléments centraux (703) sont situés entre les premiers éléments centraux (701) et les plaques de porte (102) ;
chaque troisième élément central comprend une seconde couche de transition (7031) et une seconde couche de liaison (7032) ; et
une surface de la seconde couche de transition (7031) recouvre les plaques de porte (102) et est reliée aux plaques de porte (102), une surface de la seconde couche de liaison (7032) est reliée aux plaques de porte (102), et l'autre surface de la seconde couche de liaison (7032) est reliée au premier élément central (701) respectif.

4. Ensemble arbre rotatif (10) selon la revendication 3, dans lequel il existe au moins une partie en prolongement sur un côté de la seconde couche de transition (7031) opposée à l'arbre rotatif (101), et la partie en prolongement est destinée à recouvrir un orifice d'évitement sur les plaques de porte (102) ; et
la seconde couche de liaison (7032) est divisée en au moins deux segments, les au moins deux segments de la seconde couche de liaison (7032) sont situés sur le côté de la seconde couche de transition (7031) opposée à l'arbre rotatif (101), et les au moins deux segments de la seconde couche de liaison sont situés sur deux côtés de la partie en prolongement.

5. Dispositif d'écran pliable (100), comprenant un premier élément mécanique (20), un second élément mécanique (30) et l'ensemble arbre rotatif (10) selon l'une quelconque des revendications 1 à 4, dans lequel l'ensemble arbre rotatif (10) est relié en rotation respectivement au premier élément mécanique (20) et au second élément mécanique (30) ; et
le premier élément mécanique (20) et le second élément mécanique (30) sont reliés en rotation à l'arbre rotatif (101) à l'aide respectivement des plaques de porte (102).
